(19) Europäisches Patentamt

European Patent Office

Office européen des brevets

(11) **EP 0 677 366 B1**

(12) **EUROPÄISCHE PATENTSCHRIFT**

(45) Veröffentlichungstag und Bekanntmachung des Hinweises auf die Patenterteilung:
**24.03.1999 Patentblatt 1999/12**

(51) Int. Cl.⁶: **B29B 13/08**, C08J 3/28, B60K 15/03
// B29K23/00, B29K105/16, B29L22/00, B29L31/30

(21) Anmeldenummer: **94105656.6**

(22) Anmeldetag: **13.04.1994**

(54) **Verfahren zur Herstellung von Werkstücken oder Bauteilen unter Verwendung einer polymeren Ausgangssubstanz, insbesondere von Kunststoff-Kraftstoff-Behältern**

Method of manufacturing objects or preforms using polymers as raw materials, especially for plastic fuel tanks

Procédé de fabrication d'objets ou préformes avec polymères comme matière première, spécialement pour réservoirs de carburant

(84) Benannte Vertragsstaaten:
**CH DE FR GB IT LI NL SE**

(43) Veröffentlichungstag der Anmeldung:
**18.10.1995 Patentblatt 1995/42**

(73) Patentinhaber:
**INPRO INNOVATIONSGESELLSCHAFT FÜR FORTGESCHRITTENE PRODUKTIONSSYSTEME IN DER FAHRZEUGINDUSTRIE MBH
10787 Berlin (DE)**

(72) Erfinder:
• **Rogos, Jürgen, Dr.**
  **D-10787 Berlin (DE)**
• **Hoyer, Olaf**
  **D-10787 Berlin (DE)**

(74) Vertreter:
**Hoffmann, Klaus-Dieter, Dipl.-Ing.
Kurfürstendamm 182
10707 Berlin (DE)**

(56) Entgegenhaltungen:
WO-A-86/02023          DE-A- 4 141 805
US-A- 4 264 750

• JOURNAL OF APPLIED POLYMER SCIENCE, Bd.31, Nr.3, Februar 1986, NEW YORK US Seiten 901 - 910 IN-HOUNG LOH, R. E. COHEN, R. F. BADDOUR (MASSACHUSSETS INSTITUTE OF TECHNOLOGY) 'PLASMA SURFACE MODIFICATION OF POLYMER POWDERS WITH APPLICATION TO THERMAL ENERGY STORAGE'
• DATABASE WPI Section Ch, Week 9243, Derwent Publications Ltd., London, GB; Class AGL, AN 92-355917 C43! & SU-A-1 694 610 (ELECTROMECH. INSTRUMENTS RES. INST.) 30. November 1991
• DATABASE WPI Section Ch, Week 8603, Derwent Publications Ltd., London, GB; Class AGL, AN 86-016424 C03! & JP-A-60 228 576 (TOPPAN PRINTING K.K.) 13. November 1985

EP 0 677 366 B1

**Beschreibung**

Die Erfindung betrifft ein Verfahren zur Herstellung von Werkstücken oder Bauteilen, insbesondere von Kunststoff-Kraftstoff-Behältern, die mit einer Barriere gegen die Permeation von leicht flüchtigen Substanzen versehen werden, wobei eine zumindest als Granulat vorliegende Polymermasse, die zuvor durch Plasmabehandlung zumindest teilflächig beschichtet worden ist, verwendet wird.

Das Problem der Permeation von leicht flüchtigen Substanzen aus Kunststoff-Vorratsbehältern ist hinlänglich bekannt.Zur Reduzierung dieser Permeation sind verschiedene Barriere-Verfahren vorgeschlagen worden, wie z.B. die Coextrusion, das Selarverfahren, die Fluorierung und die Plasmapolymerisation.

So ist aus der WO-A-86 02023 ein Verfahren zur Herstellung von Kunststoff-Kraftstoff-Behältern bekannt, die eine Barriere gegen die Permeation von leicht flüchtigen Sunstanzen aufweisen sollen, bei dem zunächst die Beschichtung der Oberfläche einer als Granulat vorliegenden Polymermasse erfolgt, wonach der Behälter aus dem plasmapolymerisierten Granulat geformt wird.

Bekannt ist weiterhin ein Verfahren zum Innenbeschichten von Kunststoffbehältern mit für organische Lösungsmittel undurchlässigen Schichten (DE 39 08 418 A1), bei dem die Innenseite des Behälters mit einem Niederdruckplasma beaufschlagt wird und die das Plasma bildende Gasatmosphäre eine unter diesen Bedingungen polymerisierbare gas- oder dampfförmige organische Komponente und eine Gruppe an die polymerisierende Schicht abgebende gas- oder dampfförmige Verbindung enthält, wobei diese auch aus einer einheitlichen Verbindung bestehen können.

Aus der DE 39 33 874 A1 geht weiterhin ein Verfahren zur Oberflächenmodifizierung von Behältern aus Polyolefin hervor, bei dem ein oder mehrere Behälter einem Niederdruckplasma in einer ein fluorhaltiges Gas aufweisenden Atmosphäre ausgesetzt wird bzw. werden.

Bekannt ist ferner ein Verfahren zur Behandlung von Teilen, insbesondere der Innenflächen von Kunststoff-Kraftstoff-Behältern z.B. aus Polyäthylen, mit einem unter Normalbedingungen inerten Medium (DE 30 27 531 C2), bei dem als Medium eine fluorierte Schwefelverbindung oder ein Halogenkohlenwasserstof in eine auch die Oberfläche enthaltende Unterdruckkammer eingeführt und durch Energiezufuhr bei reduziertem Druck in der Unterdruckkammer in den Plasmazustand gebracht wird.

Auch die JP-OS 3-107458 befaßt sich mit einem Barriere-Verfahren zur Reduzierung der Permeation von leicht flüchtigen Substanzen aus Kunststoff-Vorratsbehältern mittels Plasmapolymerisation.

Die aus den zuvor genannten Druckschriften hervorgehende Plasmapolymerisation der Innenoberfläche von Kunststoff-Kraftstoff-Behältern (KKB) und anderen Hohlkörpern ist mit dem Problem verbunden, daß relativ hohe Vakuumdrücke an Hohlkörpern und Reaktionskammern angelegt werden müssen. Hierdurch wird eine beträchtliche Verlängerung der Verfahrenszeit verursacht, so daß die Wirtschaftlichkeit des Gesamtprozesses gemessen an der reinen Beschichtungszeit stark reduziert wird. Weiterhin bedingen die erforderliche Größe der Vakuumkammer sowie das notwendige Handling im praktischen Einsatz zusätzliche Kosten. Es ist offensichtlich nicht möglich, prozeßwarme Hohlkörper zu evakuieren, eine Grundvoraussetzung für ein In- bzw. mit Einschränkungen für ein Online-Verfahren.

Bekannt sind weiterhin auf der Technologie der Laminar-Barriere basierende Verfahren, wobei sorgsam kontrolliert mit einem Gemisch von einem Matrixmaterial und einem damit nicht verträglichen Barrierekunststoff Sperrschichtbehälter im Extrusionsblasverfahren hergestellt werden (z.B. US-PS 4 824 618). Die beiden Polymere verbleiben in getrennten Phasen. Das Barrierematerial formt einen komplexen schichtähnlichen, lamellenartigen Aufbau in der Matrix. Eine Haftung zwischen den beiden Phasen wird durch die Anwesenheit eines speziellen Haftvermittlers erreicht,der Teil des Barriere-Konzentrates ist. Das am häufigsten eingesetzte Gemisch basiert auf einem speziellen Polyamid - Copolymer in konventionellem HFPE (vgl. SELAR RB, Du Ponts Laminar-Barriere - Technologie, S.C. Swallert Du Pont International S.A., 07/90, S. 3).

Der Erfindung liegt die Aufgabe zugrunde, ein Verfahren der eingangs erwähnten Art zur Verfügung zu stellen,bei dem eine Beschichtung der Werkstücke oder Bauteile, insbesondere der Kunststoff-Kraftstoff-Behälter im Plasma vermieden wird und zur Verkürzung der Verfahrensdauer die Herstellung des Produkts parallel zur Einbringung der Barriereschicht erfolgt.

Diese Aufgabe wird erfindungsgemäß dadurch gelöst, daß die plasmapolymerisierte Masse, die außer als Granulat auch in Form von Pulvern, zerkleinerten oder unzerkleinerten Folien aus Kunststoffen oder Verbundkonstruktionen mit Kunststoffanteilen vorliegen kann, in bzw. auf eine zur Herstellung der Werkstücke oder Bauteile verwendete polymere Ausgangssubstanz zugeführt wird, indem die plasmapolymerisierte Masse als Pulver, Granulat oder zerkleinerte Folie direkt in die Eingangszone eines Extruders oder einer Spritzgußmaschine eingegeben wird oder indem die plasmapolymerisierte Masse als Folie in ein Werkzeug eingelegt oder direkt in einem Werkzeug aufgeschmolzen und mittels Rotation an die Werkzeugwandungen gebracht wird,und daß die plasmapolymerisierte Schicht auf der Polymermasse in Form von Granulat, Pulver oder Folie durch die gewählte Verfahrensweise schichtförmig longitudinal oder transversal zur Oberfläche als geschlossene oder offene Textur angeordnet wird.

Vorzugsweise wird die oberflächenveredelte Polymermasse aus Polyolefinen oder auf Polyolefinbasis gebildet oder dem Prozeß anteilig oder insgesamt zugeführt.

Von Vorteil ist,daß in einem Vorprozeß die Beschichtung der Oberfläche des Pulvers oder des Granulats teil- oder ganzflächig chargenweise oder kontinuierlich (Prinzip 1), bzw. der Folien kontinuierlich oder diskontinuierlich ein- oder zweiseitig bandmäßig (Prinzip 2), mittels Plasmapolymerisation erfolgen kann.

Der Anteil der plasmabeschichteten Masse kann mittels Coextrusion, Mehrkomponenten- oder Gegentaktspritzgießen reduziert werden.

Weiterhin können Mischungen aus Pulver, Granulaten und/oder Folien hergestellt werden, die durch Einsatz unterschiedlicher Verfahrensparameter und Monomere aus verschiedenartigen Plasmaschichten bestehen.

Die plasmapolymerisierte Polymermasse kann auch als zusammenhängende und/oder unzusammenhängende Schichten auf ein Bauteil aus organischen oder anorganischen Werkstoffen als Sandwichschichten aufgetragen oder als zusammenhängende und/oder unzusammenhängende Schichten im Randbereich und/oder inmitten der Kunststoffwandung des Werkstücks oder Bauteils als Sandwichschichten eingebracht werden.

Die plasmapolymerisierte Schicht kann in dem jeweiligen Prozeß mit einer solchen Temperaturbeständigkeit und mechanischen Flexibilität ausgebildet werden, daß sie dauerhaft bestehen bleibt.

Die plasmapolymerisierte Schicht bildet im jeweiligen Prozeß Fragmente oder Zersetungsprodukte und bewirkt somit Abschirmeffekte. Eine geeignete Orientierung und lokale Anordnung der Plasmaschicht kann derart bewirkt werden, daß eine lokal steuerbare Eigenschaft als Gradient oder Unstetigkeit erzeugt wird.

Vorzugsweise können Rußpartikel und/oder andere Additive vor der Einbringung ins Batch zur Erhöhung der Packungsdichte der Plasmateilchen plasmabeschichtet werden.

Durch das erfindungsgemäße Einbringen von mittels Plasmaunterstützung (z.B. Plasmapolymerisation)beschichteten Pulvern, Granulaten oder Folien in eine polymere Ausgangsmatrix lassen sich die Eigenschaften oder Oberflächen von anderen organischen und anorganischen Werkstoffen verbessern bzw. veredeln. Hierbei können herkömmliche Prozesse geeigneter Weise zur Herstellung von Werkstücken, wie z.B. das Blasformen von bevorzugt aus Polyolefinen bestehenden Hohlkörpern oder von Bauteilen aus Kunststoffen oder Verbundkonstruktionen mit Kunststoffanteilen genutzt werden. Die Eigenschaftsverbesserung wird durch eine entsprechend gewählte Textur der Funktionsschicht in der polymeren Ausgangssubstanz erzielt. Je nach Anordnung und gewählter Eigenschaft der funktionellen Schichten auf dem Grundkörper ist eine Verbesserung oder Verschlechterung der Benetzbarkeit, der Oberflächenhaftung, der Oberflächenhärte und/oder der Permeation möglich. Bevorzugt werden erfindungsgemäß permeationsmindernde Plasmapolymerisate oder plasmapolimerisierte Folien in oder auf die polymere Grundmasse von Kunststoff-Kraftstoff-Behältern (KKB) eingebracht oder aufgebracht.

Das erfindungsgemäße Verfahren nutzt gegenüber einer nur diskontinuierlich durchführbaren Plasma-Innenbeschichtung komplizierter Hohlkörper eine einfachere, schnellere und somit wirtschaftlichere kontinuierlich durchführbare Plasma-Außenbeschichtung (z.B. die kontinuierliche Bandbeschichtung) von geometrisch verhältnismäßig einfachen Körpern, um eine Permeationsbarriere aufzubauen. Da der Butzenabfall sortenrein ist, wenn vom sehr geringen Fremdanteil (z.B. 0,0025 - 0,005 m-% bei etwa 100 nm dicken Schichten) abgesehen wird, sind keine Probleme beim Produktionsrecycling zu erwarten. Die Qualität der Plasmaschicht auf den Folien, Pulvern und Granulaten kann gegenüber der Plasma-Innenschicht auf Hohlkörpern im Schnelltest überprüft werden.Auch prozeßzeitkonforme rheologische Online-Prüfungen, z.B. mit dem kapillaren Bypass-Rheograph,können vorgenommen werden.

Die Beschichtung des Pulvers oder Granulats kann z.B. im Wirbelschichtsystem ( stationäre Pulver- oder Granulatwolke ) oder mit Trommelreaktoren erfolgen. Die so vorbehandelten geometrisch einfachen Pulver- oder Granulatteilchen lassen sich direkt, eventuell auch zerkleinert in die Eingangszone einer Extrusionblasform-/ Spritzgußmaschine einführen, d.h. es ist eine gezielte Einbringung einer gegenüber Kraftstoffen oder anderen diffundierenden Flüssigkeiten und Gasen permeationsmindernden Schicht in das Matrixmaterial (z.B. PE) möglich. Gegebenenfalls muß eine das Plasmapolymerisat orientierende und die gesamte Formmasse (Trägerpolymer- und Plasmapolymerisat) nicht homogen vermischende Verfahrensführung gewählt werden. Zur Verfahrensführung können konventionelle Einschnecken-Extruder mit glattem Zylinderrohr und Nutenextruder verwendet werden. Auch Großanlagen mit Speicherkopf sind geeignet. Hohe Staudrücke und eine hohe Schneckendrehzahl müssen vermieden und geeignete Düsengeometrien gewählt werden. Beim Spritzguß wird bevorzugt eine geringe Einspritzgeschwindigkeit, ein geringer Staudruck und eine niedrige Schneckendrehzahl verwendet und für eine bevorzugte Orientierung im Außenhautbereich gesorgt.

Die Barriere wird aufgebaut durch 2-dimensional (-D) oder wirksamere 3-D-Sperren in Form unzerstörter Plasmaschichten auf Additiven (Füllstoffen) und/oder den deformierten Matrixelementenoder deren Fragmenten. Es ist möglich, gezielt Plasma-Aufwachsungen aus Keimen direkt transversal zur Korn-/Granulatoberfläche zu konstruieren, die nach Transport in der Schmelze als Einlagerungen parallel zur Oberfläche der Bauteile oder Werkstücke angeordnet sind. Im Falle der 2D-Anordnung müssen Packungsdichten erreicht werden, die zwischen den Plasmaschichtfragmenten einen Abstand kleiner oder gleich dem Sphärolithdurchmesser (z.B. < 30 $\mu$m) haben. In diesem Fall entstehen transkristalline Bereiche, deren kristalline Anteile die durchquerenden Moleküle absperren oder behindern. Nachgewiesen sind um den Faktor 4 reduzierte Diffusionskoeffizienten. Im Fall einer zusätzlichen Abschirmung durch eine dichte Teilchenpackung können die Diffusionskoeffizienten noch erheblich reduziert werden. Eine bessere Barriere ist die direkte Verbindung der Sperrschicht als Steg oder Agglomerat. Der Einfluß auf die Diffusion kann als Funktion von Kristallinität, Textur, kohäsiver Energiedichte,freiem Volumen, Orientierung der Molekülketten, Interaktion eines flüchtigen Mediums zum Kunststoff, relativer Luftfeuchte, Ausgangsgröße, Symmetriefaktor, Schädigungsfaktor der Primärteilchen, Additive und Matrixwerkstoff beschrieben werden. Aufgrund der Ausgangsteilchen entsteht eine Größe der Barriereteilchen, die von grobdispers (> 0,5 μm) bis in den mm-Bereich reichen kann.

Die Erfindung wird nun im einzelnen anhand der Zeichnungen erläutert. In diesen sind:

Fig. 1   Darstellungen A bis G von möglichen Anordnungen/Modifikationen der Barrieren,

Fig. 2   eine Darstellung, aus der der Konzentrationsverlauf eines Matrixwerkstoffs und der aus barriereschichtumhüllten Matrix- und Füllstoffelementen sowie von Fragmenten über die Wanddicke eines Bauteils hervorgeht,

Fig. 3   eine schematische Schnittdarstellung einer Vorrichtung zum Extrusions - und Blasformen eines Hohlkörpers und Einbringen einer innenliegenden plasmapolymerisierten Folie, und

Fig. 4   eine schematische Schnittansicht einer mit einer Plasmaschicht versehenen Folie.

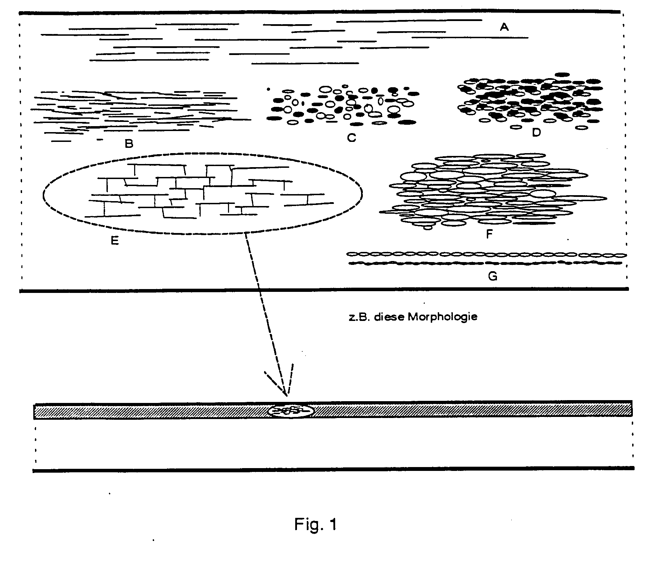

Aus Fig. 1 gehen im einzelnen die möglichen Anordnungen/Modifikationen der Barrieren in der Wand eines Hohlkörpers hervor. So zeigt Fig. 1 A nahe zueinander liegende, parallel zur Oberfläche ausgerichtete, längliche Plasmaschichten. Die Fig.1B, 1C und 1D zeigen diffuse, in Vorzugsrichtung parallel zur Oberfläche orientierte Plasmaschichten bzw. offene bzw. vermischt ausgerichtete Plasmaelemente. Fig. 1E zeigt Plasmaschichten, die miteinander durch Stege verbunden sind. Aus Fig. 1F geht eine Berührung der Partikelgrenzen der Plasmaschicht in der Art von Korn- oder Sphärolithgrenzen hervor. Gemäß Fig. 1G sind die Plasmaschichten sich schichtförmig berührend verbunden.

Prinzipiell sind aufgrund von stochastischen Platzwechselvorgängen beim Mischen keine idealen Packungen wie bei Kristallen möglich. Daraus resultiert eine Zufallsmischung, die durch statistische Methoden bestimmt werden kann. Diese Zufallsmischung wird durch die jeweils gewählten unterschiedlichen Anteile aufgegliedert , die sich nach dem Prozeß unterscheiden in

1. deformierte Form aus den ursprünglichen Granulat-, Korn- oder Folienelementen,
2. ursprüngliche Form der Füllstoffpartikel und
3. fragmentierte Barriereschichten aus Granulat, Korn, Folie und Füllstoff.

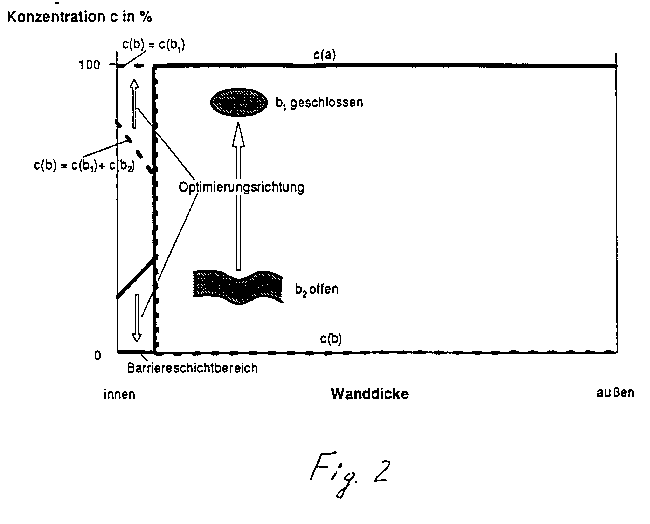

Weiterhin erfolgt eine Beeinflussung durch Orientierungseffekte. Die in 1. bis 3. genannten barrierewirksamen Elemente werden, bezogen auf die Gesamtdicke der Bauteile, nur als dünne Bereiche eingebracht. Dabei wird der Trägerwerkstoff mit a und die barriereschichtumhüllte Matrix und Füllstoffe mit $b_1$ bezeichnet. Da durch die Fragmentbildung eine Öffnung der vorher geschlossenen Barriere erfolgt, wird in Matrixwerkstoff a und Barrierefragmentanteil $b_2$ aufgeteilt.Der Konzentrationsverlauf c(a) des Matrixwerkstoffs a und der Konzentrationsverlauf c(b) aus den barriereschichtumhüllten Matrix- und Füllstoffelementen $b_1$ und der Fragmente $b_2$ ist also
$$c(b) = c(b_1) + c(b_2) \ .$$
Der Erhalt der Plasmaschicht auf den Trägerwerkstoffen wird $c(b_2) \Rightarrow 0$. Daraus folgt mit $c(b) \cong c(b_1)$, daß eine fast geschlossene Barriereschicht vorliegt, so daß eine Optimierung der Barriere durch Verschiebung des Konzentrationsverlaufs in Pfeilrichtung (Fig. 2) erreicht wird. Demzufolge enthält die vollständig geschlossene Barriereschicht nur Anteile von $b_1$.

Durch den Entmischungseffekt unterschiedlich großer Teilchen in viskoelastischen Flüssigkeiten an Düsen segregieren unterschiedlich große Teile in zusammenhängenden Reihen. Dieser Strukturierungseffekt wird genutzt, um die Durchlässigkeit zu minimieren.

In Fig. 2 sind:

a Komponente Matrixpolymer
b Komponente Barrierepolymer/Träger offen und geschlossen
$b_1$ Komponente Barrierepolymer/Träger geschlossen
$b_2$ Komponente Barrierepolymer/Träger offen (Fragmente)

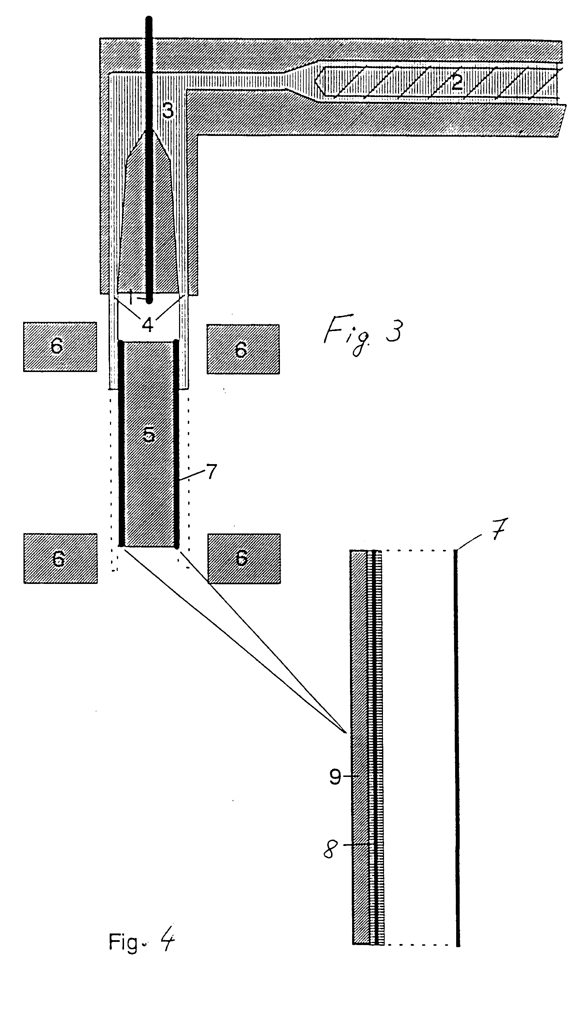

Entgegen dem Surface Welded Barrier (SWB) - Verfahren, bei dem eine Einbringung einer äußeren Sperrfolie erfolgt, basiert das aus den Fig. 3 und 4 hervorgehende Verfahren auf der Einbringung einer innenliegenden plasmapolymerisierten Folie 7. Ein weiterer Unterschied ist, daß die Permeationsminderung durch die Barrierewirkung der an der Folie 7 haftenden Plasmaschicht 8,9 erzielt wird. Die Einleitung der plasmabeschichteten Folie 7 erfolgt z.B. während des Extrusions-(2)Blasformprozesses durch Zuführung der verschweißbaren schlauchförmigen Folie 7 mittels eines Zylinders 5 in den Schlauch (Vorformling). Nach dem Aufblasen des durch eine Düse 4 getriebenen Kunststoffes 3 an der Düsenmündung 1 wird der Rohling mittels einer Schweißeinrichtung 6 verschweißt. Dabei kann die Folie 7 vor dem Kontakt durch Erhitzung (z.B. durch IR-Strahler) mit Haftvermittlern oder Klebern behandelt werden, so daß eine Verschweißung, Verklebung oder Verbesserung der Haftung erreicht wird. Probleme mit der mechanischen Festigkeit der Schweißnaht aufgrund der Plasmaschicht können durch lokales Abtrennen oder Abschmelzen in diesem Bereich bzw. durch ein gezieltes Einlegen der Folie in den Schlauch vermieden werden.

Der Schichtcharakter ist je nach gewünschtem Eigenschaftsprofil duktil oder spröd zu wählen. Dabei hat die Temperaturführung im Folgeprozeß, d.h. nach der Aufbringung auf den Trägerwerkstoff den wesentlichen Einfluß. Der Fragmentierung der Schicht durch die Dehnung der Folien wird mit einem geeigneten Schichtaufbau und möglichem Umklappen der Plasmalamellen entgegengewirkt. Diese Beschichtungselemente können in Form einer aufwachsenden Textur senkrecht zur Trägeroberfläche konstruiert werden.

**Patentansprüche**

1. Verfahren zur Herstellung von Werkstücken oder Bauteilen, insbesondere von Kunststoff-Kraftstoff-Behältern, die mit einer Barriere gegen die Permeation von leicht flüchtigen Substanzen versehen werden, wobei eine zumindest als Granulat vorliegende Polymermasse, die zuvor durch Plasmabehandlung zumindest teilflächig beschichtet worden ist, verwendet wird,
dadurch gekennzeichnet, daß
die plasmapolymerisierte Masse, die außer als Granulat auch in Form von Pulvern, zerkleinerten oder unzerkleinerten Folien aus Kunststoffen oder Verbundkonstruktionen mit Kunststoffanteilen vorliegen kann, in bzw. auf eine zur Herstellung der Werkstücke oder Bauteile verwendete polymere Ausgangssubstanz zugeführt wird, indem die plasmapolymerisierte Masse als Pulver, Granulat oder zerkleinerte Folie direkt in die Eingangszone eines Extruders oder einer Spritzgußmaschine eingegeben wird oder indem die plasmapolymerisierte Masse als Folie in ein Werkzeug eingelegt oder direkt in einem Werkzeug aufgeschmolzen und mittels Rotation an die Werkzeugwandungen gebracht wird, und daß die plasmapolymerisierte Schicht auf der Polymermasse in Form von Granulat, Pulver oder Folie durch die gewählte Verfahrensweise schichtförmig longitudinal oder transversal zur Oberfläche als geschlossene oder offene Textur angeordnet wird.

2. Verfahren nach Anspruch 1, dadurch gekennzeichnet,daß die oberflächenveredelte Polymermasse aus Polyolefinen gebildet wird.

3. Verfahren nach Anspruch 1, dadurch gekennzeichnet,daß die oberflächenveredelte Polymermasse auf Polyolefinbasis gebildet wird.

4. Verfahren nach Anspruch 1 bis 3, dadurch gekennzeichnet, daß die oberflächenveredelte Polymermasse dem Prozeß anteilig zugeführt wird.

5. Verfahren nach Anspruch 1 bis 3, dadurch gekennzeichnet, daß die oberflächenveredelte Polymermasse dem Prozeß insgesamt zugeführt wird.

6. Verfahren nach Anspruch 1 bis 5, dadurch gekennzeichnet, daß in dem Vorprozeß die Beschichtung der Oberfläche des Pulvers oder des Granulats teil- oder ganzflächig charchenweise oder kontinuierlich, bzw. der Folien kontinuierlich oder diskontinuierlich ein- oder zweiseitig bandmäßig, mittels Plasmapolymerisation erfolgt.

7. Verfahren nach Anspruch 1, dadurch gekennzeichnet,daß der Anteil der plasmabeschichteten Masse mittels Coextrusion, Mehrkomponenten- oder Gegentaktspritzgießen reduziert wird.

8. Verfahren nach Anspruch 1 bis 7, dadurch gekennzeichnet, daß Mischungen aus Pulvern, Granulaten und/oder Folien hergestellt werden, die durch Einsatz unterschiedlicher Verfahrensparameter und Monomere aus verschiedenartigen Plasmaschichten bestehen.

9. Verfahren nach Anspruch 1 bis 8, dadurch gekennzeichnet, daß die plasmapolymerisierte Polymermasse als zusammenhängende und/oder unzusammenhängende Schichten im Randbereich und/oder inmitten der Kunststoffwandung des Werkstücks oder Bauteils als Sandwichschichten eingebracht wird.

10. Verfahren nach Anspruch 1 bis 8, dadurch gekennzeichnet,daß die plasmapolymerisierte Polymermasse als zusammenhängende oder unzusammenhängende Schichten auf ein Bauteil aus organischen oder anorganischen Werkstoffen als Sandwichschichten aufgetragen wird.

11. Verfahren nach Anspruch 1 bis 10,dadurch gekennzeichnet,daß die plasmapolymerisierte Schicht in dem jeweiligen Prozeß mit einer solchen Temperaturbeständigkeit und mechanischen Flexibilität ausgebildet wird, daß sie dauerhaft bestehen bleibt.

12. Verfahren nach Anspruch 1 bis 10,dadurch gekennzeichnet,daß die plasmapolymerisierte Schicht im jeweiligen Prozeß Fragmente oder Zersetzungsprodukte bildet und somit Abschirmeffekte bewirkt.

**13.** Verfahren nach Anspruch 1 bis 12, <u>dadurch gekenn-zeichnet</u>, daß eine geeignete Orientierung und lokale Anordnung der Plasmaschicht derart bewirkt werden, daß eine lokal steuerbare Eigenschaft als Gradient oder Unstetigkeit erzeugt wird.

**14.** Verfahren nach Anspruch 1 bis 14, <u>dadurch gekenn-zeichnet</u>, daß Rußpartikel und/oder andere Additive vor der Einbringung ins Batch zur Erhöhung der Packungsdichte der Plasmateilchen plasmabeschichtet werden.

**Claims**

**1.** Method of manufacturing objects or preforms using polymers as raw materials, especially for plastic fuel tanks which will be equipped with a barrier against the permeation of easily volatile substances whereby a polymer mass is used which is at least available in form of granulates and has, at least partially, been previously coated by plasma treatment, <u>characterized thereby</u> that
the plasma-polymerized mass which can also be available, in addition to its granulate-form, as powders, fractioned oder non-fractioned foils of plastic or composite structures with plastic portions, is fed into or onto a basic substance of polymers, used for the production of objects or preforms, by introducing the plasma-polymerized mass as powder, granulates, or fractioned foil directly into the entrance zone of an extruder or an injection mould machine or by placing the plasma-polymerized mass as a foil into an object or by melting it direcly in a tool and bringing it by means of rotation to the tool walls, and that the plasma-polymerized coat on the polymer mass in form of granulates, powder, or foil is arranged by the chosen method of operation either longitudinally or transversely to the surface as closed or open texture.

**2.** Process in accordance with claim 1, <u>characterized thereby</u> that the surface-refined polymer mass is constituted from polyolefines.

**3.** Process in accordance with claim 1, <u>characterized thereby</u> that the surface-refined polymer mass is constituted on a polyolefine basis.

**4.** Process in accordance with claim 1 to 3, <u>character-ized thereby</u> that the surface-refined polymer mass is proportionally fed to the process.

**5.** Process in accordance with claims 1 to 3, <u>charac-terized thereby</u> that the surface-refined polymer mass is totally fed to the process.

**6.** Process in accordance with claims 1 and 5, <u>charac-terized thereby</u> that the coating of the surface of the powder or the granulates by means of plasma polymerization takes place in the preliminary process partly or totally in charges or continously or that of the foils continously or discontinously one-sided or two-sided in form of bands.

**7.** Process in accordance with claim 1, <u>characterized thereby</u> that the portion of the plasma-coated mass is reduced by means of co-extrusion, multicomponent or push-pull injection moulding.

**8.** Process in accordance with claims 1 to 7, <u>charac-terized thereby</u> that mixtures from powders, granulates, and/or foils are produced which because of the application of different process parameters and monomers consist of different plasma layers.

**9.** Process in accordance with claims 1 to 8, <u>charac-terized thereby</u> that the plasma-polymerized polymer mass is introduced as coherent and/or incoherent layers in the edge area and/or amid the plastic walls of the object or preform as sandwich layers.

**10.** Process in accordance with claims 1 to 8, <u>charac-terized thereby</u> that the plasma-polymerized polymer mass is appplied as coherent or incoherent layers on a preform of organic or inorganic materials as sandwich-layers.

**11.** Process in accordance with claims 1 to 10, <u>charac-terized thereby</u> that the plasma-polymerized layer is developed by means of the relevant process with such a temperature resistance and mechanical impedance that it is permanently maintained.

**12.** Process in accordance with claims 1 to 10, <u>charac-terized thereby</u> that the plasma-polymerized layer forms fragments or decomposition products in the relevant process and thus develops shieldings effects.

**13.** Process in accordance with claims 1 to 12, <u>charac-terized thereby</u> that a suitable orientation and local arrangement of the plasma layers can be created in such a manner that a locally controllable quality is developed as gradient or dicontinuity.

**14.** Process in accordance with claims 1 to 14, <u>charac-terized thereby</u> that soot particles and/or other additives are plasma-coated prior to the introduction into the batch for the increase of the packing density of the plasma particles.

**Revendications**

**1.** Procédé de fabrication d'objets ou de préformes, tout particulièrement de réservoirs de carburant plastiques munis d'une barrière contre la perméation de substances volatiles en utilisant au moins une masse polymère sous forme de granulé à laquelle un revêtement au moins partiel a été appliqué par traitement au plasma,
caractérisé par le fait que
la masse polymérisée au plasma, qui outre en granulé peut également exister sous forme de poudre, de feuilles fractionnées ou non fractionnées en plastiques ou en ouvrages composites avec parts plastiques, est amenée dans ou sur une substance de base polymère utilisée pour la fabrication des objets ou préformes en introduisant directement dans la zone d'entrée d'une boudineuse ou d'une machine à injection la masse polymérisée au plasma sous forme de poudre, de granulé ou de feuille fractionnée ou en introduisant la masse polymérisée au plasma sous forme de feuille dans un outil ou en la refondant directement dans un outil et en l'amenant vers les parois d'outil moyennant rotation et que par le mode opératoire choisi la couche polymérisée au plasma est, comme texture fermée ou ouverte, disposée en couches, longitudinalement ou transversalement à la surface, sur la masse polymère sous forme de granulé, poudre ou feuille.

2. Procédé suivant revendication 1, caractérisé par le fait que la masse polymère à surface affinée est constituée par des polyoléfines.

3. Procédé suivant revendication 1, caractérisé par le fait que la masse polymère à surface affinée est constituée sur base de polyoléfine.

4. Procédé suivant revendications 1 à 3, caractérisé par le fait que la masse polymère à surface affinée est amenée proportionnellement au procédé.

5. Procédé suivant revendications 1 a 3, caractérisé par le fait que la masse polymère à surface affinée est amenée totalement au procédé.

6. Procédé suivant revendications 1 à 5, caractérisé par le fait que dans le procédé préliminaire le revêtement moyennant polymérisation au plasma de la surface est réalisé pour la poudre ou le granulé en charges ou en continu en partie ou en total, pour les feuilles en continu ou en discontinu sur un ou sur les deux côtés en forme de bandes.

7. Procédé suivant revendication 1, caractérisé par le fait que la part de la masse revêtue de plasma est réduite moyennant coextrusion, moulage à injection à plusieurs constituants ou symétrique.

8. Procédé suivant revendications 1 à 7, caractérise par le fait qu' à partir de poudres, granulés et/ou feuilles des mélanges sont fabriqués qui en raison de l'utilisation de différents paramètres de procédé et monomères consistent on couches de plasma dissimilaires.

9. Procédé suivant revendications 1 à 8, caractérisé par le fait que la masse polymère polymérisée au plasma est introduite en couches cohérentes et/ou non cohérentes dans la zone marginale et/ou en couches sandwich au milieu de la paroi plastique de l'objet ou de la préforme.

10. Procédé suivant revendications 1 à 8, caractérisé par le fait que la masse polymère polymérisée au plasma est appliquée en couches sandwich sous forme de couches cohérentes ou non cohérentes sur une préforme en matières organiques ou inorganiques.

11. Procédé suivant revendications 1 à 10, caractérisé par le fait que la couche polymérisée au plasma est constituée dans le procédé respectif avec une résistance à la température et une flexibilité mécanique tel qu'elle consiste en permanence.

12. Procédé suivant revendications 1 à 10, caractérisé par le fait que la couche polymérisée au plasma forme dans le procédé respectif des fragments ou des produits de décomposition et par conséquent cause des effets d'écran.

13. Procédé suivant revendications 1 à 12, caractérisé par le fait qu'une orientation appropriée et une disposition locale des couches plasma sont effectuées de sorte à produire une qualité de gradient ou de discontinuité contrôlable localement.

14. Procédé suivant revendications 1 à 13, caractérisé par le fait qu'avant l'introduction dans le lot un revêtement plasma est appliqué aux particules de fumée et/ou à d'autres additifs en vue de l'augmentation de la compacité des particules plasma.

z.B. diese Morphologie

Fig. 1

**Konzentration c in %**

c(b) = c(b₁)

c(a)

100

b₁ geschlossen

c(b) = c(b₁) + c(b₂)

Optimierungsrichtung

b₂ offen

c(b)

0

Barriereschichtbereich

innen                    **Wanddicke**                    außen

*Fig. 2*

Fig. 3

Fig. 4